# NEW EUROPEAN PATENT SPECIFICATION

(11) **EP 0 808 018 B2**
(45) Date of publication and mention of the opposition decision: **08.06.2011**
(45) Mention of the grant of the patent: 03.03.2004
(21) Application number: 96303323.8
(22) Date of filing: 13.05.1996
(51) Int. Cl.: H02P 7/29, B23P 19/06, B25B 23/147

(54) **Electrical power tool having a motor control circuit for providing improved control over the torque output of the power tool**
Elektrowerkzeug mit einer Motorsteuerungsschaltung zur Verbesserung der Steuerung der Drehmomentsabgabe des Elektrowerkzeuges
Outil électrique équipé d'un circuit de commande de moteur permettant une commande améliorée du couple délivré par l'outil électrique

(43) Date of publication of application: 19.11.1997
(73) Proprietor: Black & Decker Inc., Newark, DE 19711 (US)
(72) Inventor: Gilmore, Alan, Baltimore, Maryland 21236 (US)
(74) Representative: Dlugosz, Anthony Charles

(56) References cited:
- EP-A- 0 376 214
- EP-A- 0 633 095
- EP-A- 0 680 808
- WO- -96/11525

## Description

This invention relates to an electrically driven power tool and, in particular, to a power tool such as a variable speed drill having a motor control that is adapted to increase and better control the effective torque output of the tool.

Electrical power tools, such as variable speed drills and power screwdrivers, typically include a motor control circuit that is adapted to control the speed of the output spindle of the tool by controlling the amount of current supplied to the motor. The desired motor speed is usually selected by the operator by varying the position of the trigger switch.

If the power tool is provided with an open loop motor control circuit, the speed of the output spindle of the tool will decrease as the tool is loaded and the current drawn by the motor will increase. Accordingly, if a relatively constant output speed is desired, the operator must compensate manually for the reduction in motor speed as the tool is loaded by further retracting the trigger switch to increase the power applied to the motor. If the power tool is provided with a closed loop motor control circuit, the control circuit is typically designed automatically to increase the amount of power supplied to the motor as the output spindle of the tool is loaded in order to maintain the desired speed.

Thus, when employed in a power screwdriver to drive a screw into a workpiece, for example, the current drawn by the motor will increase as the torque required to drive the screw increases, regardless of whether the control circuit provides open or closed loop control. This operation will continue until either the operator releases the trigger or the motor stalls as the increased torque required to drive the screw exceeds the torque capacity of the tool. Consequently, the effectiveness of many portable power tools, particularly power screwdrivers, is related directly to the tool's maximum torque output capacity. Obviously, the greater the output capacity of the tool, the more useful and versatile the tool. However, in order to increase significantly the torque output capacity of a tool, it is generally regarded as being necessary (assuming changes to the gear train are not an option) to increase the size of the motor and, consequently, the size, weight, and cost of the tool.

It is an object of the present invention to provide a portable electrical power tool having a motor speed control circuit that is able substantially to increase the effective torque output of a power tool for a given size motor and gear train.

It is a further object of the present invention to provide a portable electric power tool, such as a power screwdriver having a motor control circuit, that enables the operator better to control the torque output of the tool, which is particularly beneficial when driving a screw into a workpiece.

Accordingly, it is a further object of the present invention to provide an electrically driven power tool, such as a variable speed power drill, which incorporates a control circuit for controlling a motor thereof such that the motor can be alternately pulsed fully on and then fully off at a predetermined cycle time during operation of the drill.

It is another object of the present invention to provide an electrically driven power tool having such a control circuit that further provides an operator of the power tool with a means for adjusting the point at which the alternating full-on and full-off operation is initiated.

Additionally, it is an alternative object of the present invention to provide an electrically driven power tool that provides the operator with control over the magnitude of the torque bursts during the alternating phase of operation of the tool.

A control circuit is disclosed in EP-A-633095 which is disposed within the housing or body of an electrically driven power tool, such as a variable speed power drill. The control circuit generally comprises operator adjustable means for setting a threshold, which can be for example a threshold current level, which defines a transition point at which alternating on and off operation of the motor is initiated. A trigger switch is provided for selecting the desired speed of the motor and a current sensing circuit is provided for sensing the current flowing through the motor. A switching circuit is used for controlling the flow of current to the motor and a controller is used for comparing the current sensed by the current sensing circuit relative to the threshold current level selected by the operator and controlling the switching circuit to control the amount of current applied to the motor. When the current drawn by the motor exceeds the selected current threshold level, the controller is adapted temporarily to interrupt current flow for a predetermined off-time internal, and then reapply a maximum current signal for a predetermined on-time interval, and to alternate this on and off operation until the trigger switch is released.

It is an object of the present invention to provide simplified versions of a motor control circuit that are suitable for use in relatively low-cost power tools.

The present invention provides a power tool in accordance with claim 1 and a method of controlling a power tool in accordance with claim 4.

The present invention therefore provides a simplified arrangement in which the motor control circuit does not automatically transition between conventional variable speed control and the low frequency pulse mode of operation. Consequently, a more sophisticated microcomputer-based controller, as well as feedback circuitry for sensing motor current and speed, can be eliminated.

According to a preferred embodiment of the present invention, a selector switch is provided for enabling the operator to switch between a normal high frequency "drilling" mode of operation and a low frequency "screw driving" mode of operation.

Finally, a further alternative embodiment of the simplified version of the present invention is disclosed that provides a separately adjustable control knob for varying the frequency of the PWM signal. More particularly, the trigger switch in this embodiment functions in a conventional manner to control the duty cycle of the PWM signal. An additional operator actuable knob or dial, preferably located on the top of the drill, is provided for selectively setting the frequency of the PWM signal. Thus, for example, when driving small screws requiring more control, a moderately low frequency (e.g., 50 Hz) can be used which reduces the maximum off time between successive pulses and thereby limits the magnitude of the torque spikes applied to the screw. However, when setting large screws, a lower frequency (e.g., 10 Hz) can be selected which results in sufficiently long off periods to enable the gear train to completely relax, thereby allowing the subsequent build-up of greater potential energy and the application large torque bursts to the screw. Additionally, the operator can simply set the frequency to a normal high PWM frequency level (e.g., 12 KHz) for operation as a conventional variable speed drill.

The invention will now be further described with reference to the accompanying drawings, in which:
Figure 1 is an elevational side view of a typical variable speed power drill with which the control circuit of the present invention may be used;
Figure 2 is a circuit diagram of a motor control circuit incorporating the teachings of the present invention;
Figure 3 is a diagram graphically illustrating the relationship between output torque and motor rotation for a typical power drill;
Figures 4a - 4c are timing diagrams illustrating the operation of the present motor control circuit at various low frequencies;
Figure 5 is an additional alternative embodiment of the motor control circuit shown in Figure 2 and
Figures 6a and 6b are timing diagrams illustrating the operation of the motor control circuit shown in Figure 5.

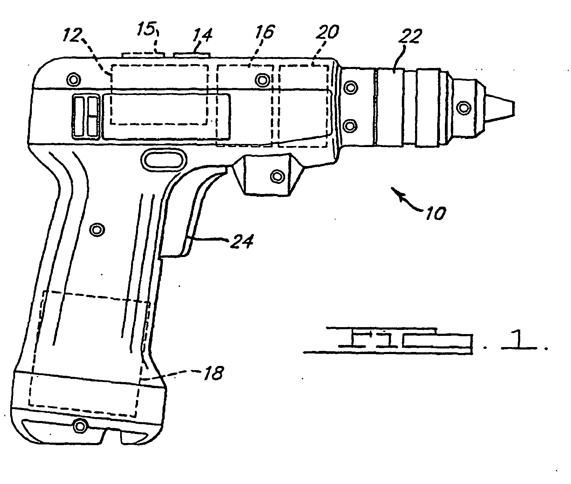

Referring to Figure 1, an electrically driven power tool in the form of a cordless (i.e. battery driven) variable speed power drill 10 incorporating an electronic control circuit 12 in accordance with preferred embodiments of the present invention is illustrated. As will readily be appreciated by those skilled in the art, the motor control circuit taught by the present invention is adaptable to other types of electrical power tools, such as power screwdrivers, electric pop rivet guns, and the like.

The drill 10 includes, in conventional fashion, a motor 16 and a rechargeable battery 18 for powering the motor 16. While the drill 10 has been illustrated as battery powered, it will be appreciated that the control circuit 12 of the present invention could just as easily be used with an A/C powered drill with little or no modification, provided suitable phase control circuitry is included.

The motor 16 of the drill is adapted to drive through a conventional gear train 20, a tool bit-receiving chuck 22. A trigger switch 24, operating trigger resistor R1, controls the battery voltage across the motor 16 and therefore the current flowing through the motor 16 to provide an operator with the capability of varying the speed of the chuck 22 to suit various work needs.

It should be appreciated that the relax time, and thus the desired off-time, will vary from tool to tool depending on the design of the gear train. Accordingly, power tools such as drills having gear trains of differing design will most likely require different off-times to allow their gear trains to completely relax. The off-time for a specific gear train design may be determined by any suitable testing procedure which provides a relatively accurate determination of the time interval required, once torque is removed from the gear train, for the gear train to return to a "relaxed" condition. With the preferred embodiments described herein, an off-time within a range of about 20 ms to 100 ms provides sufficient time for the gear train to completely relax, although this can vary greatly depending upon the particular type of tool.

In addition, it will be appreciated that it is not critical to the present invention that the duration of the off-time period be sufficient to enable the gear train of the power tool to completely relax. In particular, if the off-time period is such that the gear train is allowed to only partially relax, an enhanced torque effect will nonetheless be realised when power is reapplied, but simply to a lesser degree than if the gear train is allowed to completely relax.

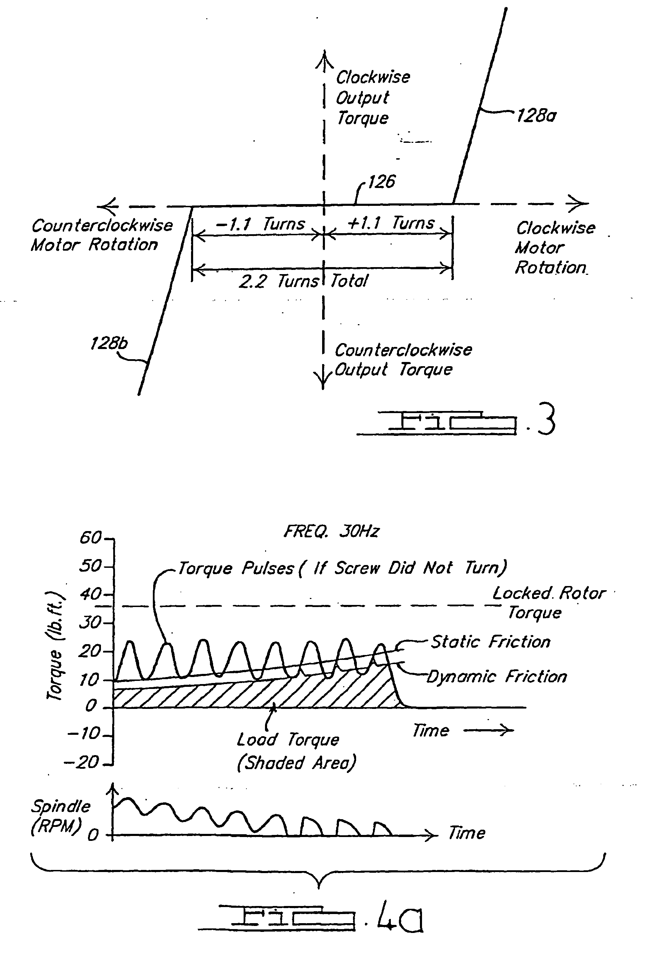

With particular reference to Figure 3, a graph illustrating the relationship between motor rotation and torque for a typical power tool is shown. The gear train in a commercial power tool, such as a drill, has an inherent "looseness" due to normal manufacturing tolerances, which may allow the tool spindle to be freely rocked back and forth over a given range, typically between 30° - 90°. However, due to the gear reduction in the gear train, with the output spindle locked against rotation, the motor armature may be rotatable over a much greater range, typically in excess of two complete revolutions. This is demonstrated by the flat portion 126 of the curve centred around the vertical axis which represents 2.2 complete revolutions of the motor armature. Consequently, when the motor of the tool is initially started there is actually a lag between the point in time when the motor armature begins to rotate and when the tool spindle begins to rotate. In addition, as the tool spindle is loaded and the torque output of the motor increases, the gear train will "tighten" further. This is demonstrated by the rising portions 128a and 128b of the curve.

However, when power to the motor is reduced or interrupted and the torque applied by the motor output shaft drops substantially below the loading on the spindle, the gear train will begin to untighten or "relax". In fact, if the output torque of the motor is permitted to drop substantially to zero, the relaxation of the gear train will actually drive the motor armature in the reverse rotational direction. In other words, the relaxation of the gear train as motor torque collapses will drive the motor in the reverse rotational direction down curve portion 128a, back through zero along flat portion 126, and possibly even slightly down curve portion 128b.

Consequently, it can be appreciated that the greatest enhanced torque effect can be realised by interrupting power to the motor for a period of time sufficient to substantially coincide with the point of maximum reverse rotation of the motor armature. This optimum off-time period can readily be determined empirically for any given tool by connecting a torque transducer to the output spindle of the tool and selectively varying the off time between pulses until the greatest torque peak is achieved. This is due to the fact that further increases in the off-time period beyond the optimum period only serves to unnecessarily delay the reapplication of power and does not further increase the magnitude of the subsequent torque pulse.

However, it will additionally be recognised that there is single off-time period that is optimum for all conditions under which a particular tool may be used. For example, when using a drill to drive relatively small screws, it may not be desirable to generate large torque pulses that make it difficult to accurately set the screw. Rather, relatively shorter off-time periods and the re-application of less than full power may be preferred in such applications to provide controlled, incremental rotation of the screw enabling accurate final setting of the screw head relative to the surface of the workpiece. In other words, in applications where the maximum torque required to complete the task is less than the torque capacity of the tool (i.e., referred to as the "locked rotor torque"), it may nonetheless be advantageous to operate the tool in the "ratchet mode" for better control. In short, the present invention can be advantageously employed not only in applications requiring enhanced torque output, but also in applications requiring improved torque control. Consequently, when employing the control techniques of the present invention to applications primarily for the purpose of improved torque control, such as the setting of small screws, it is not necessary that the gear train completely relax between pulses or even that the motor torque actually drop to zero between pulses. Rather, the improved control advantages of the present invention can be obtained by controlling the motor in a manner that causes uneven, incremental rotation of the tool output spindle.

Turning now to Figures 4a - 4c, a series of exemplary timing diagrams is shown to illustrate the control techniques taught by the present invention as applied to the task of setting different sized screws. Figure 4a is representative of a suitable control technique for setting a relatively small screw requiring less than the maximum torque capacity of the tool.

Note that due to the limited torque requirements of this application, it is not necessary that the torque output of the motor actually drop to zero between pulses. Rather, the reduction in motor torque below the loading on the tool spindle (i.e., the dynamic friction level) is sufficient to substantially reduce and even temporarily halt the rotation of the output spindle of the tool. The subsequent momentary increase in power output above the static friction level thus serves to incrementally rotate the output spindle. This repetitive pulsing of the motor continues until the operator releases the trigger. Consequently, the operator is readily able to accurately control the final setting of the screw.

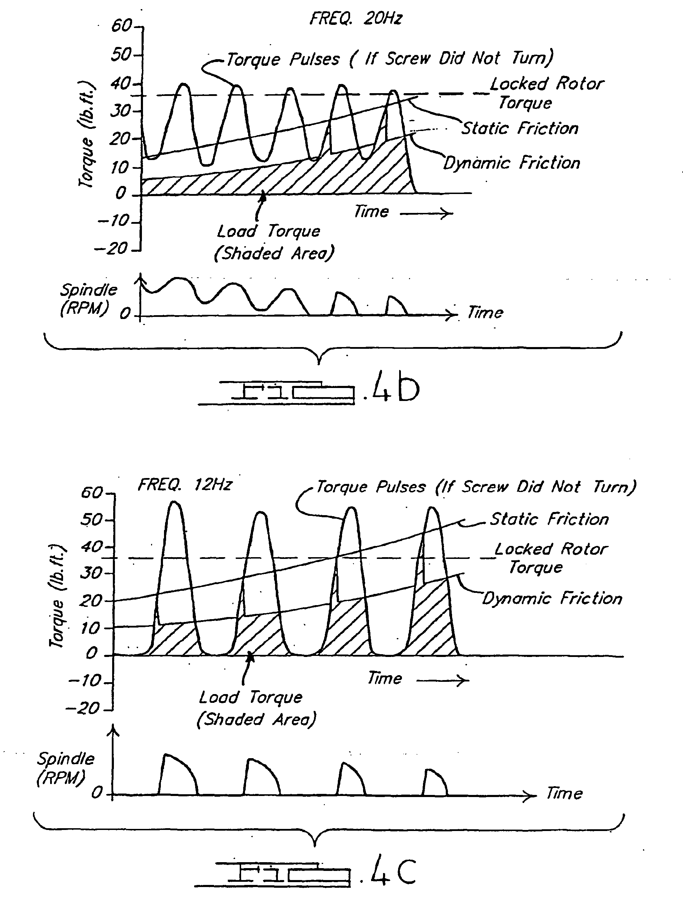

Figure 4b is representative of a control scheme for setting a larger screw requiring the application of torque nearer to the capacity of the tool. In this application, power to the motor is sufficiently reduced between pulses for the torque output of the motor to drop closer to zero. Consequently, a degree of gear train relaxation is achieved, enabling the subsequent generation of enhanced torque pulses to incrementally drive the screw until properly set.

Lastly, Figure 4c is representative of a control scheme suitable for setting a very large screw that is otherwise beyond the capacity of the particular tool. In this instance, the pulsing mode utilises off-time periods of sufficient duration to enable the gear train to completely relax to maximise the magnitude of the subsequent torque pulses and successfully complete the setting of the screw.

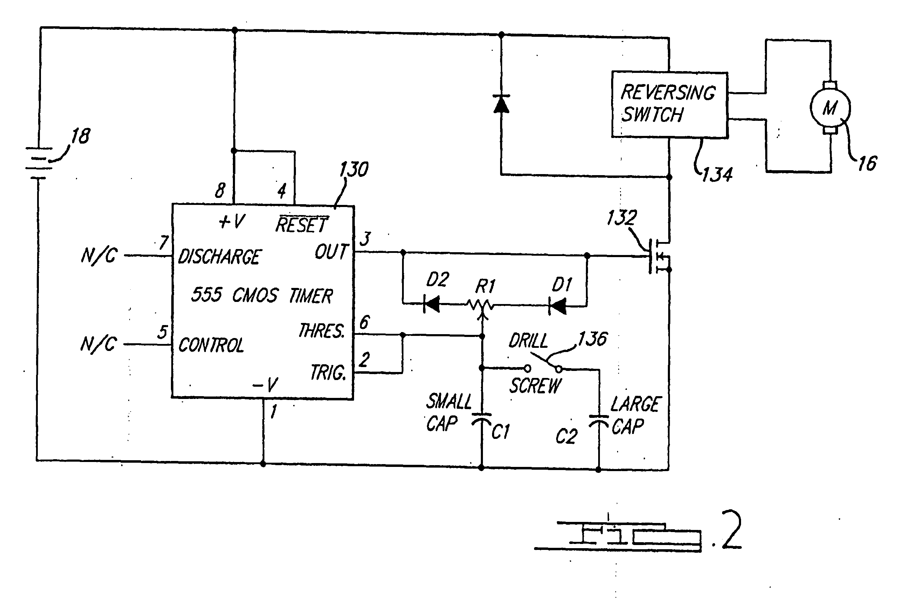

Turning now to Figure 2, a motor control circuit 12 for a power tool according to the present invention is shown. In particular, it has been determined that many advantages can be achieved with a simplified version of the motor control circuit that does not automatically transition from a conventional high frequency variable speed control mode to a low frequency pulse control mode. Consequently, the feedback circuitry for sensing motor current and speed can be eliminated, and a conventional 555 timer-based controller can be substituted for the more sophisticated and expensive microcomputer-based controller described in EP633,095.

In particular, the controller shown in Figure 2 includes a conventional 555 CMOS timer 130 that is controlled by the charging and discharging cycles of the external RC timing circuit comprised of trigger resister R1 and selectively connected capacitors C1 and/or C2. A user-operated selector switch 136, positioned in a readily accessible location on the tool, for example position 14 shown in Figure 1, is provided to selectively connect the capacitor C2 into or out of the control circuit. The 555 timer circuit 130 is adapted to produce a HI signal at output pin 3 when the signal applied to its TRIGGER input (pin 2) is less than 33% of the supply voltage (V+). A LO output signal is produced at output pin 3 when the signal supplied to the THRESHOLD input (pin 6) is greater than 66% of the supply voltage (V+). When the OUT terminal (pin 3) is HI, the MOSFET 132 is rendered conductive and the motor 16 is energised via the reversing switch 134.

In operation (and assuming for the moment that selector switch 136 is in the open position or "DRILL" mode), capacitor C1 is initially discharged and therefore the output signal at TRIGGER input (pin 2) is less than 33% of battery voltage (+V). Accordingly, output pin 3 is HI, turning on MOSFET 132 and energising the motor 16. With output (pin 3) HI, capacitor C1 is charged through diode D1 and trigger resistor R1. The rate at which capacitor C1 charges is, of course, determined by the value of capacitor C1 and the setting of trigger switch R1. When capacitor C1 attains a charge that exceeds 66% of battery voltage (+V), the output (pin 3) will go LO, thereby turning off MOSFET 132 and de-energising the motor 16. At this point, capacitor C1 will cease charging and begin to discharge through trigger resistor R1, diode D2, and into the OUT terminal (pin 3) of the 555 timer 130 which is now at ground potential. The rate at which capacitor C1 discharges is similarly determined by the value of capacitor C1 and the setting of trigger resistor R1. When the charge on capacitor C1 drops below 33% of battery voltage (+V), the OUT terminal (pin 3) will again go HI repeating the cycle. Thus, it will be appreciated that the control circuit produces a substantially square wave output signal at OUTPUT pin 3, the duty cycle of which is controlled by the setting of trigger resistor R1. Note, however, that the frequency of the duty cycle signal remains constant as a change in the position of trigger resistor R1 increasing the charge time of the capacitor C1 causes a corresponding decrease in the discharge time of the capacitor C1, and vice versa. In other words, if the duration of the HI signal at pin 3 is increased by a given amount, the duration of the corresponding LO signal is decreased by the same amount. Consequently, the frequency of the output signal, which is determined by the combined period of the HI and LO signals, remains the same.

In the preferred embodiment, the value of capacitor C1 is selected to provide a relatively high duty cycle frequency in the range of 1 - 12 KHz. Accordingly, when selector switch 136 is in the open position or "DRILL" mode shown, the power tool functions as a conventional variable speed drill. On the other hand, the value of capacitor C2 is preferably selected so that the parallel combination of capacitors C1 and C2 provides a long charge and discharge cycle resulting in a duty cycle frequency in the range of 10 - 50 Hz. Accordingly, when the selector switch 136 is closed, or in the "screwdriver" mode, the off-time periods at low to moderate trigger settings are sufficiently long to cause a pulsing of the motor 16 under load.

Consequently, the control circuit in Figure 2 provides the operator with the option of operating the tool in either a conventional drill mode or in a continuous low frequency mode more suitable for controllably driving and setting screws.

Moreover, it will be appreciated that the operation of the present control circuit in the low frequency screwdriver mode is readily compatible with the typical operating technique employed by users of conventional drills when driving screws. Specifically, when using a conventional variable speed drill to drive a screw, the operator will typically drive the screw initially at or near full power and then gradually release the trigger to slow the motor to carefully seat the head of the screw to its proper depth. This same technique is readily usable with the control circuit of the present invention when continuously operated in the low frequency screwdriver mode. In particular, when operated with the trigger at or near its fully retracted position, the high duty cycle setting supplies essentially continuous power to the motor. As a result, the motor rotates smoothly to rapidly drive the screw. Thereafter, as the trigger is released and the duty cycle reduced, the motor begins to ratchet under load, thereby causing incremental rotation of the screw. As previously described, the pulsing action of the motor provides the operator with the ability to more accurately control the final depth to which the screw head is set. Consequently, the operator is not required to learn a new technique in order to effectively use the tool when equipped with the present controller.

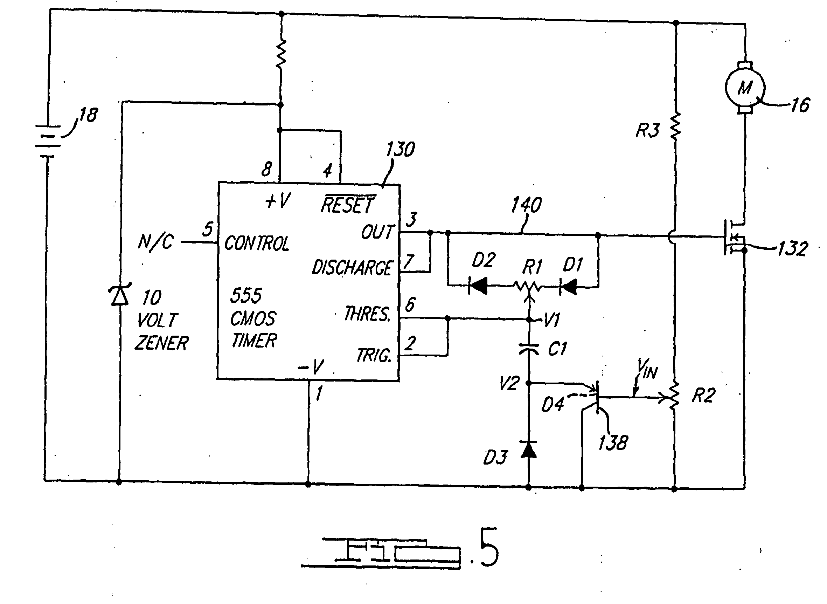

Referring now to Figure 5, a further simplified version of the control circuit according to the present invention is shown. This embodiment of the present controller includes a second variable resistor R2, in addition to the trigger resistor R1, for selectively varying the frequency of the duty cycle control signal within a predetermined range (e.g., 10 Hz - 3 KHz). The trigger resistor R1 controls the percentage duty cycle of the output signal from pin 3 that controls the conduction of the FET 132 in the same manner as that described in connection with the embodiment shown in Figure 2. The values of resistor R3 and variable resistor R2 are selected so that the voltage signal (Vᵢₙ) at the wiper terminal of variable resistor R2 can be varied between approximately 0 volts and 1/3(+V) minus 2 diode drops. To understand the manner in which variable resistor R2 controls the frequency of the duty cycle signal at output pin 3, it is helpful to view the base-emitter junction of the transistor 138 as a diode (designated by a phantom line as D4) with its cathode signal at the wiper of variable resistor connected to the (V IN) R2.

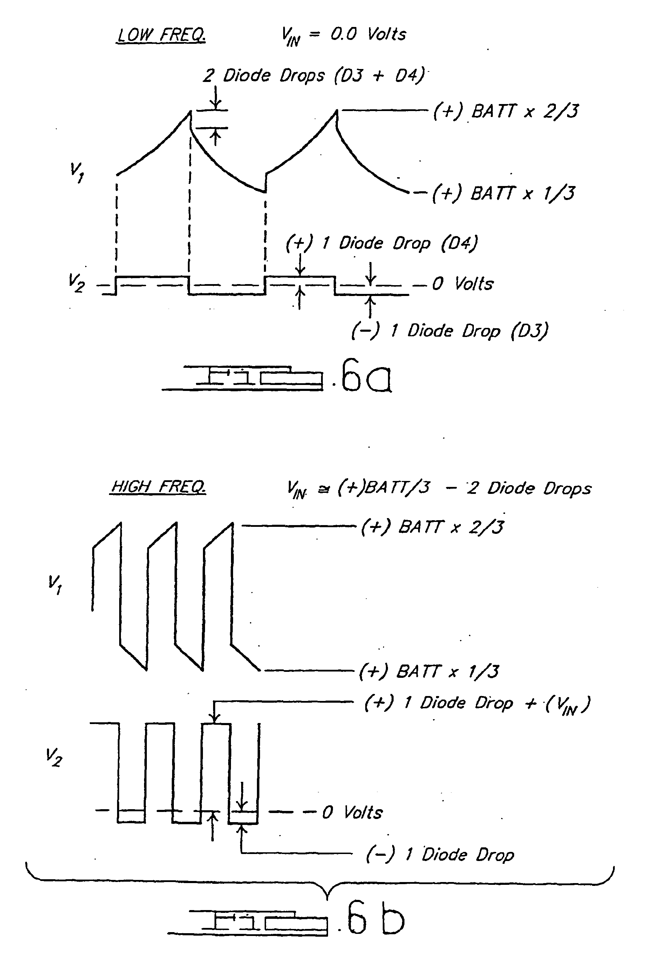

With additional reference to Figures 6a and 6b, when Vin is approximately equal to 0 volts, the signal at V₂ switches between a diode drop above and a diode drop below 0 volts as the duty cycle control signal on output line 140 cycles on and off. Consequently, there is little effect on the charge and discharge periods of capacitor C1 and the frequency of the duty cycle signal is approximately equal to 0.71 (R1 x C1). (Figure 6a). However, when the Vᵢₙ signal is increased to approximately its maximum value of 1/3(+V) minus 2 diode drops, the signal at V2 now switches between Vᵢₙ(+)l diode drop to (-)l diode drop. Thus, since the switching thresholds of the 555 timer 130 are 1/3(+V) and 2/3(+V), the capacitor C1 need only charge and discharge by a very small amount to cycle between the 113 (+V) and 213 (+V) thresholds. As a result, the charge on the capacitor C1 cycles between the two switching thresholds at a significantly faster rate, thereby increasing the frequency of the duty cycle control signal on line 140 accordingly. In short, the frequency control resistor R2 permits the operator to vary the frequency of the PWM control signal between a predefined low frequency (e.g., 10 Hz), determined by the values of R1 and C1, and a very high frequency (e.g., 500 KHz) essentially limited by the maximum switching frequency of the 555 timer 130. In the preferred embodiment, however, the value of resistor R3 is selected so as to limit the maximum frequency of the PWM control signal to approximately 3 KHz.

Thus, it will be appreciated that the embodiment illustrated in Figure 5 provides the operator with enhanced flexibility at a modest incremental cost. For example, to operate the tool in a conventional drill mode, the frequency knob R2 is adjusted to its highest frequency setting. Alternatively, to provide the most effective ratcheting mode, such as may be needed to set very large screws, the frequency knob R2 is adjusted to its lowest frequency setting. In addition, the operator has the option of selectively setting the frequency knob R2 to any position in between suitable, for example, to setting smaller screws, or for providing a combination of conventional and pulse control with changes in the duty cycle of the control signal as described above.

With all of the embodiments described herein, it will be appreciated that the ratcheting or low frequency mode of operation could easily be employed, with little or no modification, to break loose tightly seated wood screws, nuts, etc. where the continuous application of torque proves ineffective. It will also be appreciated that the ratcheting or low frequency mode of operation disclosed herein could also be adapted with little or no modification for a variety of power tools including; but not limited to, power rivet tools, for example, to improve the effectiveness of such tools.

Finally, it has been demonstrated that the present invention can be implemented in various simplified forms that are producible at very low cost and yet significantly improve the performance and effectiveness of the power tool to which it is applied.

## Claims

1. A power tool (10) having an electric motor (16) for driving an output spindle having a tool holder (22) operatively coupled thereto, an operator actuable switch (24, R1) for controlling the amount of power applied to the motor, and a control circuit (130, 132) for modulating the power supplied to the motor in accordance with the position of said switch by varying the duty cycle of a constant frequency, pulse width modulated (PWM) direct current (d.c.) control signal generated by the control circuit to thereby control the speed of the motor, wherein said control circuit (130, 132) selectively generates said PWM d.c. control signal at a first constant frequency that is sufficiently high to cause said motor to provide a substantially smooth application of torque to said output spindle over substantially the entire duty cycle range of said control signal, or at a second constant frequency that is sufficiently low to cause said motor to provide, over a substantial portion of the duty cycle range of said control signal, bursts of torque to said output spindle that cause substantial variation in the speed of rotation of said output spindle between successive bursts of torque, **characterised in that** the control circuit comprises a timer (130), which is controlled by the charging and discharging cycle of a RC timing circuit and said power tool includes a second operator actuable switch (136, R2) for selectively setting the frequency of said PWM control signal, either by selectively varying the charging and discharging cycle of a first capacitor (C1) which is part of the RC timing circuit, or by selectively connecting a second capacitor (C2) into or out of the control circuit.

2. The power tool of claim 1 **characterised in that** said second operator actuable switch (136,R2) is adapted to selectively set the frequency of said PWM control signal to either a first high frequency greater than 1 KHz or a second low frequency less than 50 HZ.

3. The power tool of claim 1 **characterised in that** said second operator actuable switch (136,R2) is further adapted to selectively vary the frequency of said PWM control signal within a range that includes 10 Hz-50 Hz.

4. A method of controlling a power tool (10) having an electric motor (16) for driving an output spindle having a tool holder (22) operatively coupled thereto and a control circuit (130, 132) that is responsive to the position of a first operator actuable device (24, R1) for determining the duty cycle of a pulse width modulated (PWM) control signal generated by the control circuit and the method comprises the step of controlling the average level of power supplied to the motor (16) in accordance with the position of said first operator actuable device (24, R1) **characterised in that** the control circuit comprises a timer (130) which is controlled by the charging and discharging cycle of a RC timing circuit and said power tool includes a second operator actuable device (136, R2) wherein the control circuit is responsive to the position of the second operator actuable device (136, R2) for determining the frequency of said PWM control signal for controlling the application of power to the motor, and the method comprises the step of controlling the frequency of said PWM control signal in accordance with the position of said second operator actuable device (136, R2), either by the second operator actuable device (136, R2) selectively varying the charging and discharging cycle of a first capacitor (C1) which is part of the RC timing circuit, or by the second operator actuable device (136, R2) selectively connecting a second capacitor (C2) into or out of the control circuit.

5. The method of claim 4 **characterised in that** the frequency of said PWM control signal is less than 50 Hz.

6. The method of claim 4 **characterised in that** the frequency of said PWM control signal is set either to a first frequency greater than 1 KHz or to a second frequency less than 50 Hz.

## Patentansprüche

1. Elektrowerkzeug (10) mit einem Elektromotor (16) zum Antreiben einer Abtriebsspindel mit einem wirksam daran gekoppelten Werkzeughalter (22), einen vom Benutzer betätigbaren Schalter (24, R1) zum Steuern der Menge der an den Motor angelegten Leistung, und eine Steuerschaltung (130, 132) zum Modulieren der an den Motor angelegten Leistung gemäß der Stellung des genannten Schalters durch Verändern des Tastgrads eines von der Steuerschaltung erzeugten, pulsweitenmodulierten (PWM) Gleichstrom-Steuersignals mit konstanter Frequenz, um **dadurch** die Drehzahl des Motors zu steuern, wobei die genannte Steuerschaltung (130, 132) selektiv das genannte PWM-Gleichstrom-Steuersignal mit einer ersten konstanten Frequenz erzeugt, die ausreichend hoch ist, um zu bewirken, dass der genannte Motor über im Wesentlichen den gesamten Tastgradbereich des genannten Steuersignals eine im Wesentlichen gleichmäßige Ausübung von Drehmoment auf die genannte Abtriebsspindel liefert, oder mit einer zweiten konstanten Frequenz, die ausreichend niedrig ist, um zu bewirken, dass der genannte Motor über einen wesentlichen Abschnitt des Tastgradbereichs des genanten Steuersignals Drehmomentstöße an die genannte Abtriebsspindel zu liefern, die eine wesentliche Veränderung der Drehzahl der genannten Abtriebsspindel zwischen aufeinanderfolgenden Drehmomentstößen bewirken, **dadurch gekennzeichnet, dass** die Steuerschaltung einen Zeitgeber (130) umfasst, der durch den Lade- und Entladezyklus einer RC-Zeitschaltung gesteuert wird und das genannte Elektrowerkzeug einen zweiten, vom Benutzer betätigbaren Schalter (136, R2) umfasst, um selektiv die Frequenz des genannten PWM-Steuersignals einzustellen, entweder durch selektives Verändern des Lade- und Entladezyklus eines ersten Kondensators (C1), der Teil der RC-Zeitschaltung ist, oder durch selektives Koppeln bzw. Auskoppeln eines zweiten Kondensators (C2) in die bzw. aus der Steuerschaltung.

2. Kraftgetriebenes Werkzeug nach Anspruch 1, **dadurch gekennzeichnet, dass** der zweite, von dem Benutzer betätigbare Schalter (136, R2) dazu ausgestaltet ist, um die Frequenz des PWM-Steuersignals wahlweise entweder auf eine erste hohe Frequenz größer als 1 KHz oder eine zweite niedrige Frequenz von weniger als 50 Hz einzustellen.

3. Kraftgetriebenes Werkzeug nach Anspruch 1, **dadurch gekennzeichnet, dass** der zweite, vom Benutzer betätigbare Schalter (136, R2) außerdem dazu ausgestaltet ist, um die Frequenz des PWM-Steuersignals wahlweise innerhalb eines Bereiches zu verändern, der 10 Hz bis 50 Hz einschließt.

4. Verfahren des Steuerns eines Elektrowerkzeugs (10) mit einem Elektromotor (16) zum Antreiben einer Abtriebsspindel mit einem wirksam daran gekoppelten Werkzeughalter (22) und einer Steuerschaltung (130, 132), die auf die Stellung einer ersten, vom Benutzer betätigbaren Vorrichtung (24, R1) anspricht, um den Tastgrad eines von der Steuerschaltung erzeugten, pulsweitenmodulierten (PWM) Steuersignals zu bestimmen und wobei das Verfahren den Schritt des Steuerns des mittleren Niveaus der an den Motor (16) angelegten Leistung gemäß der Stellung der genannten ersten, vom Benutzer betätigbaren Vorrichtung (24, R1) umfasst, **dadurch gekennzeichnet, dass** die Steuerschaltung einen Zeitgeber (130) umfasst, der durch den Lade- und Entladezyklus einer RC-Zeitschaltung gesteuert wird und das genannte Elektrowerkzeug eine zweite, vom Benutzer betätigbare Vorrichtung (136, R2) umfasst, wobei die Steuerschaltung auf die Stellung der zweiten, vom Benutzer betätigbaren Vorrichtung (136, R2) anspricht, um die Frequenz des genannten PWM-Steuersignals zum Steuern des Anlegens von Leistung an den Motor zu bestimmen, und das Verfahren den Schritt des Steuerns der Frequenz des genannten PWM-Steuersignals gemäß der Stellung der genannten zweiten, vom Benutzer betätigbaren Vorrichtung (136, R2) umfasst, entweder, indem die zweite, vom Benutzer betätigbare Vorrichtung (136, R2) selektiv den Lade- und Entladezyklus eines ersten Kondensators (C1), der Teil der RC-Zeitschaltung ist, verändert, oder indem die zweite, vom Benutzer betätigbare Vorrichtung (136, R2) selektiv einen zweiten Kondensator (C2) in die Steuerschaltung koppelt oder daraus auskoppelt.

5. Verfahren nach Anspruch 4, **dadurch gekennzeichnet, dass** die Frequenz des PWM-Steuersignals niedriger als 50 Hz ist.

6. Verfahren nach Anspruch 4, **dadurch gekennzeichnet, dass** die Frequenz des PWM-Steuersignals entweder auf eine erste Frequenz höher als 1 KHz oder auf eine zweite Frequenz niedriger als 50 Khz eingestellt wird.

## Revendications

1. Outil électrique (10) comportant un moteur électrique (16) pour entraîner une fusée de sortie à laquelle est couplé opérationnellement un porte-outil (22), un commutateur (24, R1) actionnable par l'opérateur pour commander la quantité de puissance appliquée au moteur, et un circuit de commande (130, 132) pour moduler la puissance fournie au moteur en fonction de la position dudit commutateur en faisant varier le cycle de service d'un signal de commande à courant continu (C.C.) modulé en largeur d'impulsions (PWM), de fréquence constante, généré par le circuit de commande afin d'ainsi commander la vitesse du moteur, dans lequel ledit circuit de commande (130, 132) génère sélectivement ledit signal de commande C.C. PWM à une première fréquence constante suffisamment élevée pour amener ledit moteur à exercer une application sensiblement régulière d'un couple à ladite fusée de sortie sur sensiblement toute la plage de cycle de service dudit signal de commande, ou à une seconde fréquence constante suffisamment basse pour amener ledit moteur à fournir, sur une partie considérable de la plage de cycle de service dudit signal de commande, des salves de couple à ladite fusée de sortie qui entraînent une variation considérable de la vitesse de rotation de ladite fusée de sortie entre des salves successives de couple, **caractérisé en ce que** le circuit de commande comprend une temporisation (130), laquelle est commandée par le cycle de charge et de décharge d'un circuit de synchronisation RC, et ledit outil électrique comporte un second commutateur (136, R2) actionnable par l'opérateur pour régler sélectivement la fréquence dudit signal de commande PWM, soit en faisant sélectivement varier le cycle de charge et de décharge d'un premier condensateur (C1), soit en connectant sélectivement un second condensateur (C2) dans le circuit de commande ou hors de celui-ci.

2. L'outil motorisé selon la revendication 1, **caractérisé en ce que** ledit deuxième interrupteur (136, R2), actionnable par un opérateur, est adapté pour régler sélectivement la fréquence dudit signal de commande PWM, soit à une première fréquence, haute, supérieure à 1 kHz, soit à une deuxième fréquence, basse, inférieure à 50 Hz.

3. L'outil motorisé selon la revendication 1, **caractérisé en ce que** ledit deuxième interrupteur (136, R2), actionnable par un opérateur, est en outre adapté pour, sélectivement, faire varier la fréquence dudit signal de commande PWM, dans une plage allant de 10 Hz à 50 Hz.

4. Procédé de commande d'un outil électrique (10) comportant un moteur électrique (16) pour entraîner une fusée de sortie à laquelle est couplé opérationnellement un porte-outil (22) et un circuit de commande (130, 132) qui répond à la position d'un premier dispositif (24, R1) actionnable par l'opérateur pour déterminer le cycle de service d'un signal de commande modulé en largeur d'impulsions (PWM) généré par le circuit de commande, le procédé comprenant l'étape de commande du niveau moyen de puissance fournie au moteur (16) en fonction de la position dudit premier dispositif (24, R1) actionnable par l'opérateur **caractérisé en ce que** le circuit de commande comprend une temporisation (130) qui est commandée par le cycle de charge et de décharge d'un circuit de synchronisation RC et ledit outil électrique comporte un second dispositif (136, R2) actionnable par l'opérateur, le circuit de commande répondant à la position du second dispositif (136, R2) actionnable par l'opérateur pour déterminer la fréquence dudit signal de commande PWM afin de commander l'application de puissance au moteur, et le procédé comprend l'étape de commande de la fréquence dudit signal de commande PWM en fonction de la position dudit second dispositif (136, R2) actionnable par l'opérateur, soit en faisant sélectivement varier au moyen du second dispositif (136, R2) actionnable par l'opérateur le cycle de charge et de décharge d'un premier condensateur (CA) qui fait partie du circuit de synchronisation RC, soit en connectant sélectivement au moyen du second dispositif (136, R2) actionnable par l'opérateur un second condensateur (C32) dans le circuit de commande ou hors de celui-ci.

5. Le procédé selon la revendication 4, **caractérisé en ce que** la fréquence dudit signal de commande PWM est inférieure à 50 Hz.

6. Le procédé selon la revendication 4, **caractérisé en ce que** la fréquence dudit signal de commande PWM est réglée, soit à une première fréquence, supérieure à 1 kHz, soit à une deuxième fréquence, inférieure à 50 Hz.
